# FASCICULE DE BREVET EUROPEEN

(11) **EP 0 619 025 B1**
(45) Date de publication et mention de la délivrance du brevet: **28.02.1996**
(21) Numéro de dépôt: 93902358.6
(22) Date de dépôt: 21.12.1992
(51) Int. Cl.: G01V 1/20, B06B 1/06

(54) **ANTENNE ACOUSTIQUE LINEAIRE**
LINEARE AKUSTISCHE ANTENNE
LINEAR ACOUSTIC ANTENNA

(30) Priorité: 26.12.1991 FR 9116162
(43) Date de publication de la demande: 12.10.1994
(73) Titulaire: THOMSON-CSF, F-75008 Paris (FR)
(72) Inventeur: LAGIER, Michel, F-92402 Courbevoie Cédex (FR); MAGAND, François, F-92402 Courbevoie Cédex (FR); DUFOURCQ, Philippe, F-92402 Courbevoie Cédex (FR); GRAGNOLATI, Claude, F-92402 Courbevoie Cédex (FR)
(74) Mandataire: Desperrier, Jean-Louis
(86) Numéro de dépôt international: FR9201216
(87) Numéro de publication internationale: WO9313433

(56) Documents cités:
- EP-A- 0 264 320
- EP-A- 0 375 498
- EP-A- 0 416 992
- GB-A- 2 130 844
- US-A- 3 906 505
- US-A- 4 305 141

## Description

La présente invention se rapporte aux antennes acoustiques linéaires permettant de recevoir des signaux acoustiques en déterminant la direction dont ils proviennent. Les antennes de ce type sont généralement destinées à être remorquées derrière un bateau, en particulier pour faire de la prospection pétrolière.

Dans une antenne acoustique de ce type, les capteurs de réception sont généralement formés d'hydrophones omnidirectionnels répartis de place en place le long de l'antenne. Des dispositifs de traitement électronique des signaux de réception de ces hydrophones permettent, plus ou moins facilement de former des voies directives de réception qui servent à déterminer la direction dans laquelle se trouve la source du bruit reçu par les hydrophones.

Les fréquences étant basses, quelques kHz, les hydrophones sont omnidirectionnels dans un plan perpendiculaire à l'axe de l'antenne de sorte que l'on ne sait pas discriminer les directions des sources venant de droite ou de gauche et d'en haut ou d'en bas ; il y a ambiguïté.

On connaît diverses techniques pour lever cette ambiguïé. Ainsi dans le brevet français n° 2 640 842 (EP-A-375 498), déposé le 20 décembre 1988 au nom de la demanderesse, on a décrit un dispositif dans lequel chaque hydrophone est composé de 4 capteurs groupés deux à deux pour former deux dipoles orthogonaux. Ces capteurs sont constitués d'un bilame on polymère piézoélectrique placé sur les faces d'un parallélépipède rectangle. Chaque capteur est donc en quelque sorte "surfacique", et cette disposition permet d'obtenir une antenne directionnelle avec laquelle on peut former des voies dans toutes les directions, notamment dans les directions situées dans le plan perpendiculaire à l'axe de l'antenne dans laquelle sont placés les hydrophones. Malheureusement le coût de fabrication d'un tel ensemble et de l'antenne qui les contient est très important.

On connaît aussi de la demande de brevet français 8911749, déposée le 8 septembre 1989 par la demanderesse, et correspondant également au brevet britannique 2 130 844, un dispositif de formation de voies avec levée d'ambiguïté, dans une antenne acoustique linéaire remorquée, qui utilise 3 capteurs élémentaires pour chaque hydrophone de base, ces capteurs étant disposés en triangle dans un plan vertical à l'axe de l'antenne. Là aussi le coût est élevé puisque cela revient à tripler le nombre de capteurs.

Il est aussi connu du brevet US 3,906,505 de lever au moins une ambiguïté grâce à une paire de diagrammes de directivité en forme de cardioïdes opposées, et de lever la deuxième ambiguïté avec une deuxième paire de cardioïdes décalée de 90°. Ceci n'est pas suffisant pour constituer un "chapelet" de capteurs.

Il est enfin connu du brevet français 2 536 622, déposé par la demanderesse le 19 novembre 1982, une méthode pour obtenir un diagramme de directivité de forme de 8 à l'aide d'un capteur formé d'un bilame encastré dans une masse d'inertie et de circuits électroniques de traitement adéquats. Ce brevet ne concerne que cette méthode et ne fait aucune allusion aux antennes linéaires.

Pour pouvoir former des voies et lever l'ambiguïté d'une manière facile et économique, et pour pallier ces inconvénients, l'invention propose une antenne linéaire acoustique selon la revendication 1.

D'autres particularités et avantages de l'invention apparaîtront clairement dans la description suivante faite à titre d'exemple non limitatif en regard des figures annexées qui représentent :
- la figure 1 : une vue en perspective cavalière d'un hydrophone selon l'invention ;
- la figure 2 : une vue en coupe du capteur de la figure 1 ;
- la figure 3 : un schéma des circuits électroniques de traitement du signal issu de ce capteur ;
- la figure 4 : une vue en perspective cavalière d'une variante du capteur de la figure 1 ;
- la figure 5 : une vue en coupe d'une variante de fixation du bilame dans un capteur selon l'invention ; et
- la figure 6 : une représentation schématique des modes de vibration des bilames.

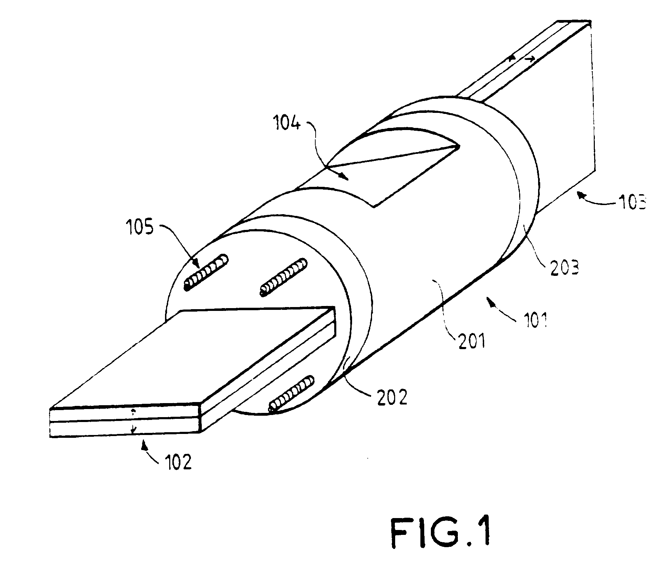

On a représenté sur la figure 1 un hydrophone selon l'invention. Ces hydrophones élémentaires sont répartis le long de l'antenne linéaire, à l'intérieur du tube souple formant l'enveloppe de celle-ci.

Cet hydrophone comprend une pièce sensiblement cylindrique 101, formant une masse d'inertie, aux extrémités de laquelle sont fixés deux bilames flexibles 102 et 103, de préférence en polymère piézoélectrique. Ces bilames sont encastrés dans les extrémités de la pièce 101, de manière à ce que leurs plans soient longitudinaux à l'axe du cylindre et donc à celui de l'antenne lorsque l'hydrophone est monté dans celle-ci; et à ce que les plans des deux bilames soient orthogonaux entre eux.

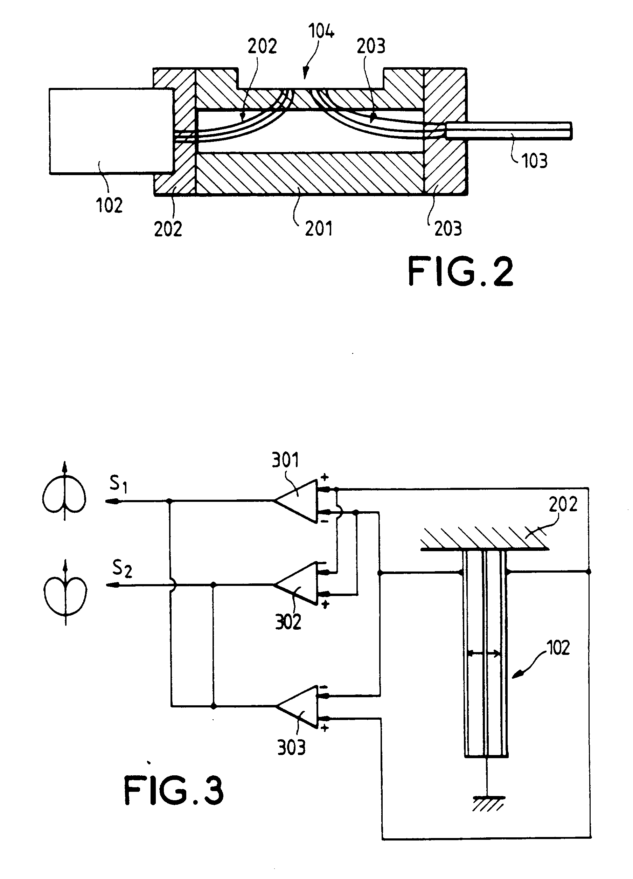

Comme représenté en coupe sur la figure 2 par rapport à la figure 1, cette pièce centrale est creuse et elle est formée par exemple d'un cylindre central 201 creux qui est fermé à chaque extrémité par deux pièces 202 et 203 en forme de disques appelées de manière connue "tapes". Le cylindre central 201 comporte un évidement 104 sur sa face latérale. Cet évidement permet de loger les dispositifs de traitement électronique, lesquels sont reliés aux bilames 102 et 103 par des fils de connexions 202 et 203. Ceux-ci traversent les "tapes", puis la paroi latérale du cylindre central au niveau du creux 104, pour être reliés aux circuits de traitement (qui ne sont pas représentés sur la figure). Le rôle du creux à l'intérieur de la pièce 101 est donc double. D'une part il permet le passage des fils de connexions. D'autre part il permet d'avoir un hydrophone moins lourd, ce qui est important puisque la flottabilité totale de l'antenne remorquée doit être sensiblement nulle.

Les circuits électroniques situés dans l'évidemment 104 sont fixés au fond de cet évidement, par collage par exemple, et sont avantageusement recouverts d'une couche de résine isolante, un polymère par exemple, qui vient de préférence combler cet évidement pour reconstituer la forme cylindrique de la pièce 101.

Pour pouvoir placer et maintenir ces hydrophones dans une position correcte à l'intérieur de la gaine de l'antenne, on utilise des câbles 105 à haute résistance, en Kevlar (marque déposée) par exemple, qui passent par des trous percés longitudinalement dans cette pièce 101 et qui peuvent soit simplement traverser les tapes, les câbles circulant alors dans le creux intérieur du cylindre 201, soit traverser simultanément les tapes et le cylindre 201 si ces trous sont percés relativement près de la surface externe du cylindre 201.

Pour placer en position les hydrophones dans l'antenne, on les fait glisser sur les câbles après avoir enfilé ceux-ci dans les trous prévus à cet effet. Lorsqu'ils sont en position on les immobilise, par exemple avec des serre-câbles bloqués sur le câble de chaque côté des tapes. Le nombre de câbles utilisés peut être variable selon des critères propres au reste des éléments de l'antenne, mais on en utilisera de préférence 4.

On a représenté schématiquement sur la figure 3 un bilame 102 encastré dans une tape 202, avec les circuits électroniques de traitement qui permettent d'obtenir la directivité voulue.

Ce bilame est formé classiquement de deux couches d'un matériau piézoélectrique souple, tel par exemple qu'un polymère piézoélectrique semblable au PVDF. Ces deux couches sont séparées par une électrode centrale conductrice et recouvertes de deux électrodes extérieures conductrices ; ces trois électrodes étant elles-mêmes souples. Un tel bilame constitue donc un capteur de vitesse, et sa réponse à une onde acoustique qui vient le solliciter est proportionnelle à la vitesse de cette onde et non pas à la pression. Ceci permet de l'utiliser pour des mesures particulières bien connues dans l'art.

L'électrode centrale est réunie à la masse, et les deux électrodes extérieures d'une part à deux amplificateurs différentiels 301 et 302, et d'autre part à un amplificateur sommateur 303. L'une des électrodes est réunie à l'entrée + de l'amplicateur 301 et à l'entrée - de l'amplificateur 302, et l'autre électrode à l'entrée - de l'amplificateur 301 et à l'entrée + de l'amplificateur 302. Les deux électrodes sont en outre réunies aux deux entrées + de l'amplificateur 303.

Selon une particularité de ce montage électronique les signaux sortant de l'amplificateur 301, et ceux sortant de l'amplificateur 302, présentent un diagramme de directivité, en fonction de la direction de l'onde acoustique venant exciter le bilame 102, qui a la forme d'un 8 dont les deux lobes sont perpendiculaires à la surface du bilame. En additionnant alors, comme sur le schéma, la sortie de l'amplificateur 303 aux sorties des amplificateurs 301 et 302, on obtient des signaux de sortie S₁ et S₂ dont les diagrammes de directivité, en relation avec la direction de l'onde sonore par rapport au plan du bilame 102, présentent la forme de deux cardioïdes inverses l'une de l'autre pour ces deux signaux S₁ et S₂et dont la "pointe" du coeur est dirigée vers l'extérieur du plan du bilame, perpendiculairement à celui-ci.

Ces signaux S₁ et S₂ sont alors envoyés au bateau tracteur de l'antenne par l'intermédiaire de connexions courant à l'intérieur de l'antenne, puis dans le câble tracteur, pour être traités dans des circuits adéquats situés sur le bateau. Ces circuits permettent de former des voies dans les directions voulues en appliquant à ces signaux des déphasages appropriés. Cette transmission et ce traitement sont connus en eux-mêmes.

Par contre le fait d'obtenir, selon l'invention , des directivités élémentaires en forme de cardioïdes directement sur les signaux S₁ et S₂ permet d'obtenir d'une part une réjection arrière importante sur chaque voie ainsi formée, et d'autre part un levé de doute. Ce levé de doute est obtenu en déterminant celui des signaux S₁ et S₂ qui est le plus fort, ce qui détermine par rapport au bilame 102 le demi-espace dans lequel se trouve la source du signal acoustique.

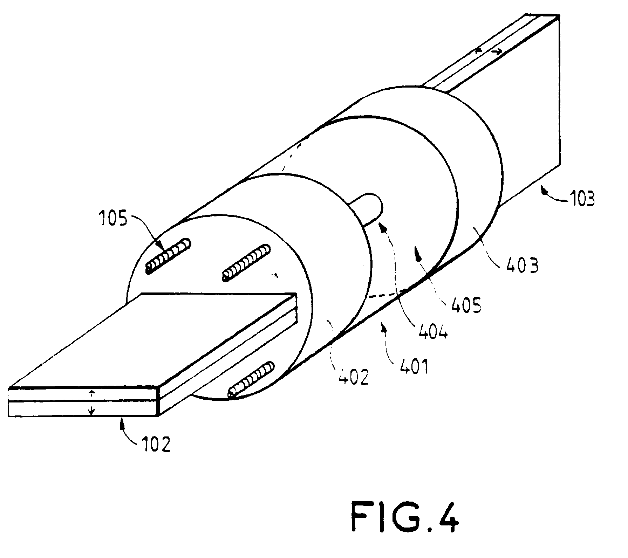

L'amplificateur additionneur 303 ainsi relié aux deux électrodes externes du bilame 102 donne un signal correspondant à un diagramme omnidirectionnel. On peut utiliser pour obtenir ce diagramme omnidirectionnel le dispositif représenté sur la figure 4, qui est tout à fait semblable à celui de la figure 1 si ce n'est que l'on a supprimé la partie centrale de la pièce 101 pour y insérer un hydrophone de pression de type connu 401, lequel est placé entre deux pièces 402 et 403. Celles-ci sont semblables aux tapes 202 et 203, en étant éventuellement plus longues pour présenter une masse suffisante pour maintenir efficacement les bilames 102 et 103. Pour rétablir la continuïté de cette pièce 401 formant le corps de l'hydrophone, on remplit l'espace entre les pièces 402 et 403 de préférence en surmoulant autour de l'hydrophone de pression 404 une masse plastique 405 qui s'étend entre ces pièces 402 et 403 en formant un cylindre continu terminé par ces deux pièces. Le produit utilisé pour ce surmoulage est avantageusement un produit connu du type polyuréthanne, dont l'impédance acoustique est sensiblement égale à celle de l'eau de mer. Les circuits électroniques de traitement des différents signaux provenant des hydrophones, aussi bien des bilames que de l'hydrophone central de pression, seront eux aussi avantageusement noyés dans cette masse de résine plastique.

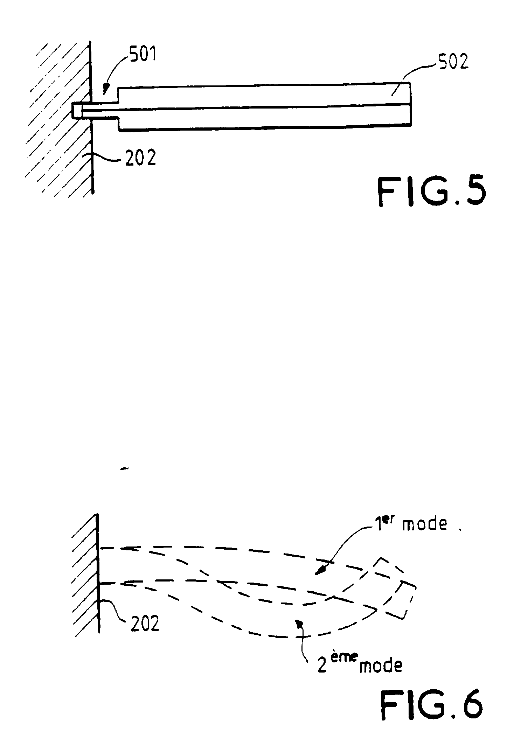

A titre de variante, et en fonction de la flexibilité du bilame utilisé et des gammes de fréquence où l'on souhaite travailler, on peut, comme représenté sur la figure 5, encastrer partiellement l'extrêmité du bilame dans la tape correspondante.

Pour cela on amincit l'extrémité encastrée du bilame en effectuant un lamage sur chaque face de celui-ci le long de l'extrémité destinée à être encastrée. La largeur de la fente creusée dans la tape 202 est alors adaptée à l'extrêmité ainsi amincie du bilame 502. L'amincissement est suffisamment large pour que lorsque celui-ci est enfoncé dans cette fente, une partie 501 de cette extrémité amincie se trouve libre en dehors de la fente en éloignant la partie plus épaisse du bilame de la surface de la tape. De cette manière au niveau de l'encastrement le bilame se comporte comme s'il travaillait en rotation autour de cet encastrement et non plus en flexion. De cette manière on atténue très fortement le premier mode de vibration au profit du deuxième mode de vibration, comme représenté sur la figure 6. Ceci permet de faire fonctionner le bilame sur des fréquences plus hautes, situées au-dessus de la fréquence de résonnance correspondant au deuxième mode de vibration.

A titre d'exemple, on peut utiliser un support en aluminium d'un poids de 200 g avec des bilames de 30 mm de long X 30 mm de large et 2 mm d'épaisseur. Les fréquences correspondantes sont alors situées au-dessus de 10 Hz.

## Revendications

1. Antenne linéaire acoustique, comportant un ensemble d'hydrophones répartis le long de l'antenne pour former des voies de réception directives, caractérisée en ce que chaque hydrophone comprend au moins un capteur de vitesse formé d'au moins un bilame flexible (102) encastré à une extrémité d'une masse d'inertie (101) et des moyens (301-303) pour traiter les signaux de ce capteur de manière à obtenir deux diagrammes de directivité en forme de cardioïdes opposées et pointées respectivement perpendiculairement aux deux faces du bilame, ces diagrammes permettant de lever au moins une ambiguïté dans les voies de réception, ce capteur et les moyens pour obtenir une seule cardioïde étant connus en eux-mêmes, et en ce que la masse d'inertie est formée d'un cylindre (201) creux fermé par deux tapes (202, 203) dans lesquelles viennent respectivement s'encastrer les bilames (102, 103).

2. Antenne selon la revendication 1, caractérisée en ce que chaque hydrophone comporte en outre un deuxième bilame (103) flexible encastré à l'autre extrémité de la masse d'inertie (101) perpendiculairement au plan du premier bilame, et des moyens de traitement des signaux de ce deuxième bilame pour former des signaux de réception semblables à ceux du premier bilame mais décalé de 90° par rapport à ceux-ci et pour permettre de lever deux ambiguités perpendiculaires entre elles.

3. antenne selon la revendication 2, caractérisée en ce que l'une des levées d'ambiguité est du type droite/gauche, et l'autre du type haut/bas.

4. Antenne selon l'une quelconque des revendications 1 à 3, caractérisée en ce que le cylindre (201) comprend un évidement latéral (104) permettant de loger les moyens de traitement (301 - 303) des signaux des bilames.

5. Antenne selon l'une quelconque des revendications 1 à 4, caractérisée en ce que la masse d'inertie est formée de deux pièces d'extrémité (402, 403) sensiblement cylindriques dans lesquelles sont encastrés les bilames, et que l'hydrophone comprend en outre un hydrophone de pression (404) placé entre les deux pièces d'extrémité, et un surmoulage s'étendant entre les deux pièces d'extrémité pour reconstituer avec celle-ci un cylindre sensiblement continu.

6. Antenne selon la revendication 5, caractérisée en ce que les moyens de traitement (301 - 303) des signaux des bilames sont noyés dans le surmoulage.

7. Antenne selon l'une quelconque des revendications 1 à 6, caractérisée en ce que la masse d'inertie est percée de trous longitudinaux permettant de loger des câbles de fixation (105) s'étendant tout au long de l'antenne.

8. Antenne selon l'une quelconque des revendications 1 à 6, caractérisée en ce que les bilames (502) comportent une extrémité amincie (501) permettant d'encastrer le bilame dans la masse d'inertie (202) de manière à ce que ce bilame présente au point d'encastrement un mouvement de rotation et non pas un mouvement de flexion.

## Patentansprüche

1. Lineare akustische Antenne mit einer Gruppe von entlang der Antenne verteilt angeordneten Hydrophonen, mit denen Richtempfangskanäle gebildet werden, dadurch gekennzeichnet, daß jedes Hydrophon mindestens eine Geschwindigkeitsmeßsonde, die von mindestens einem Biegestreifen aus zwei Schichten (102) gebildet wird, der mit einem Ende in einer Trägheitsmasse (101) eingespannt ist, und Mittel (301 bis 303) aufweist, um die Signale dieser Sonden zu verarbeiten, so daß sich zwei Richtdiagramme in Form von einander entgegengerichteten Kardioiden ergeben, die senkrecht zu den beiden Seiten des Biegestreifens ausgerichtet sind, wobei diese Diagramme mindestens eine Mehrdeutigkeit in den Empfangskanälen beheben können und wobei die Sonde und die Mittel für die Bildung einer einzigen Kardioide an sich bekannt sind, und daß die Trägheitsmasse von einem Hohlzylinder (201) gebildet wird, der durch zwei Deckel (202 und 203) verschlossen wird, in die die Streifen (102, 103) eingespannt sind.

2. Antenne nach Anspruch 1, dadurch gekennzeichnet, daß jedes Hydrophon außerdem einen zweiten Biegestreifen (103), der am anderen Ende der Trägheitsmasse (101) senkrecht zur Ebene des ersten Biegestreifens eingespannt ist, sowie Mittel zur Verarbeitung der von diesem zweiten Streifen kommenden Signale aufweist, die ähnliche Empfangssignale wie die des ersten Biegestreifens, aber um 90° bezüglich der ersteren versetzt erzeugen, so daß zwei Mehrdeutigkeiten in zueinander senkrecht stehenden Richtungen beseitigt werden können.

3. Antenne nach Anspruch 2, dadurch gekennzeichnet, daß eine der Mehrdeutigkeiten vom Typ rechts/links und die andere vom Typ oben/unten ist.

4. Antenne nach einem beliebigen der Ansprüche 1 bis 3, dadurch gekennzeichnet, daß der Zylinder (201) eine seitliche Vertiefung (104) aufweist, in der die Mittel (301 bis 303) zur Verarbeitung der Signale der Biegestreifen Platz finden.

5. Antenne nach einem beliebigen der Ansprüche 1 bis 4, dadurch gekennzeichnet, daß die Trägheitsmasse von zwei im wesentlichen zylindrischen Endstücken (402, 403) gebildet wird, in die die Streifen eingespannt sind, und daß das Hydrophon weiter ein Druckmeßhydrophon (404) zwischen den beiden Endstücken sowie einen Gießmantel enthält, der sich zwischen den beiden Endstücken erstreckt, um mit diesen wieder einen im wesentlichen kontinuierlichen Zylinder zu bilden.

6. Antenne nach Anspruch 5, dadurch gekennzeichnet, daß die Mittel (301 bis 303) zur Verarbeitung der Signale der Streifen in den Gießmantel eingebettet sind.

7. Antenne nach einem beliebigen der Ansprüche 1 bis 6, dadurch gekennzeichnet, daß die Trägheitsmasse von Längslöchern durchzogen ist, in die entlang der ganzen Antenne verlaufende Befestigungsseile (105) eingefädelt werden können.

8. Antenne nach einem beliebigen der Ansprüche 1 bis 6, dadurch gekennzeichnet, daß die Biegestreifen (502) ein verdünntes Ende (501) besitzen, über das sie in die Trägheitsmasse (202) so eingespannt werden können, daß der Biegestreifen am Einspannpunkt eine Schwenk- anstatt einer Biegebewegung erfährt.

## Claims

1. Linear acoustic antenna, including a set of hydrophones distributed along the antenna to form directional reception paths, characterized in that each hydrophone comprises at least one velocity sensor formed by at least one flexible bimetallic strip (102) fitted to one end of an inertial mass (101) and means (301-303) for processing the signals from this sensor so as to obtain two directionality diagrams in the form of opposite cardioids respectively pointed perpendicularly to the two faces of the bimetallic strip, these diagrams making it possible to resolve at least one ambiguity in the reception paths, this sensor and the means for obtaining a single cardioid being known per se, and in that the inertial mass is formed by a hollow cylinder (201) closed by two plugs (202, 203) into which the bimetallic strips (102, 103) are respectively fitted.

2. Antenna according to Claim 1, characterized in that each hydrophone furthermore includes a second flexible bimetallic strip (103) fitted to the other end of the inertial mass (101), perpendicularly to the plane of the first bimetallic strip, and means for processing the signals from this second bimetallic strip for forming reception signals which are similar to those of the first bimetallic strip but offset by 90° with respect to these signals and to make it possible to resolve two mutually perpendicular ambiguities.

3. Antenna according to Claim 2, characterized in that one of the ambiguity resolutions is of the right/left type and the other of the up/down type.

4. Antenna according to any one of Claims 1 to 3, characterized in that the cylinder (201) comprises a lateral recess (104) making it possible to accommodate the means (301-303) for processing the signals from the bimetallic strips.

5. Antenna according to any one of Claims 1 to 4, characterized in that the inertial mass is formed by two substantially cylindrical end parts (402, 403) into which the bimetallic strips are fitted, and in that the hydrophone furthermore comprises a pressure hydrophone (404) placed between the two end parts, and an overmoulded part extending between the two end parts to reconstitute with the inertial mass a substantially continuous cylinder.

6. Antenna according to Claim 5, characterized in that the means (301-303) for processing the signals from the bimetallic strips are embedded in the overmoulded part.

7. Antenna according to any one of Claims 1 to 6, characterized in that the inertial mass is pierced by longitudinal holes making it possible to accommodate fastening cables (105) extending all along the antenna.

8. Antenna according to any one of Claims 1 to 6, characterized in that the bimetallic strips (502) include a narrowed end (501) making it possible to fit the bimetallic strip into the inertial mass (202) in such a way that this bimetallic strip has, at the point of insertion, a rotational movement rather than a bending movement.
